# EUROPÄISCHE PATENTSCHRIFT

(11) **EP 0 905 844 B1**
(45) Veröffentlichungstag und Bekanntmachung des Hinweises auf die Patenterteilung: **17.09.2008**
(21) Anmeldenummer: 98113766.4
(22) Anmeldetag: 23.07.1998
(51) Int. Cl.: H02G 3/12

(54) **Elektrisches Installationsgerät**
Electrical installation device
Un appareil d'installation électrique

(30) Priorität: 29.09.1997 DE 19742847
(43) Veröffentlichungstag der Anmeldung: 31.03.1999
(73) Patentinhaber: ABB AG, 68309 Mannheim (DE)
(72) Erfinder: Schmidt, Karsten, Dipl.-Ing., 42477 Radevormwald (DE)
(74) Vertreter: Miller, Toivo

(56) Entgegenhaltungen:
- WO-A-90/12433
- DE-A- 4 101 979
- DE-A- 19 632 536

## Beschreibung

Die Erfindung betrifft ein elektrisches Installationsgerät für den versenkten Einbau in einer Ausnehmung, insbesondere in einer Wandeinbaudose, in einer Montagefläche, welches Installationsgerät mit selbsteinstellenden, als Federbügel ausgebildeten Haltemitteln versehen ist, die sich an der Innenfläche der Ausnehmung form- und kraftschlüssig anlegen und das Installationsgerät fixieren

Ein elektrisches Installationsgerät mit den Merkmalen des Oberbegriffes des Anspruchs 1 ist in DE-A- 41 01 979 beschrieben.

Es ist allgemein bekannt, elektrische Installationsgeräte für den versenkten Einbau, das heißt für den Unterputzeinbau, mit lösbaren Haltemitteln zu versehen, welche auf einfache Weise gestatten, das betreffende Gerät zu fixieren und bedarfsweise wieder zu entfernen.

Herkömmliche Haltemittel sind als Spreizen bekannt, die schwenkbar an dem jeweiligen Installationsgerät befestigt sind und mit Hilfe von Stellschrauben so betätigbar sind, daß sie radial abstehen und sich hierbei form- und kraftschlüssig an die Innenwand der jeweiligen Montageöffnung anlegen. Um die Wirkung zu verbessern, sind die freien ausschwenkenden Enden dieser Spreizen üblicherweise mit Zacken oder ähnlichen Anformungen versehen, die einen innigen formschlüssigen Verbund ermöglichen.

Die Handhabung dieser bekannten Spreizen ist aufgrund der sowohl beim Fixieren als auch beim Lösen erforderlichen Betätigung der Stellschrauben umständlich, so daß andere Lösungen gesucht und entwickelt wurden.

Eine solche neuere Lösung beruht darauf, daß zwei diametral angeordnete Federbügel vorgesehen sind, die mit dem Installationsgerät jeweils einendig verbunden sind. Das freie Ende steht hierbei entgegen der Einschubrichtung des Installationsgerätes unter einem Winkel radial ab. Beim Einbau des Installationsgerätes in der Einbaudose legen sich die freien Enden dieser Federbügel an der Innenwand der Montageöffnung an und fixieren mittels der Federkraft das Gerät in der betreffenden Öffnung beziehungsweise Einbaudose.

Zur Demontage des betreffenden Gerätes ist das Lösen der Federbügel beiderseits des Installationsgerätes erforderlich, indem die freien Enden zum Installationsgerät hin bewegt werden. Abhängig von der jeweiligen Gestaltung dieser Federbügel kann dies rein manuell, das heißt nur mit der Hand, oder mittels Werkzeug erfolgen. Auf jeden Fall ist es erforderlich, die Federbügel zusammenzudrücken und so den Formschluß mit der Innenwand aufzuheben. Dies führt häufig genug zu Problemen bei der Handhabung und erweist sich als äußerst umständlich.

Ausgehend von diesem Stand der Technik ist es Aufgabe der Erfindung, ein elektrisches Installationsgerät der eingangs genannten Art anzugeben, welches mit selbsteinstellenden Haltemitteln versehen ist und dennoch eine vereinfachte Betätigung gestatten.

Diese Aufgabe wird erfindungsgemäß gelöst durch die kennzeichnenden Merkmale des Anspruchs 1. Weitere vorteilhafte Ausgestaltungen und Weiterbildungen der Erfindung sind in den Unteransprüchen gekennzeichnet.

Entsprechend der Erfindung ist vorgesehen, daß die Führungen für die Haltemittel von paarweise einander zugeordneten Schienen mit trapezförmigem Querschnitt gebildet sind, deren Abstand sich radial nach außen verengt und welche die Haltemittel formschlüssig führen.

Während bei bekannten Lösungen die Haltemittel unlösbar mit dem betreffenden Installationsgerät verbunden sind, ist nunmehr durch die Erfindung eine wesentliche Vereinfachung in der Handhabung erreicht, da beim Ausbau des Installationsgerätes die Verrastung der Haltemittel gelöst wird, so daß das Installationsgerät ungehindert aus der Einbauöffnung entfernt werden kann.

Die Haltemittel sind jeweils in Führungen angeordnet, wobei die Führungen mit dem Installationsgerät verbunden sind. Je nach Ausgestaltung des Installationsgerätes, das heißt, je nachdem ob das Installationsgerät ein Umgehäuse aufweist, in welchem der Sockel mit den übrigen Funktionsteilen untergebracht ist, oder ob der Sockel wie üblich ohne Umgehäuse verwendet wird, sind die Führungen am Gehäuse einstückig angeformt oder mechanisch am Sockel befestigt.

Die Axialführung und stabile Fixierung der in den Führungen aufgenommenen Haltemittel wird dadurch begünstigt, daß die Führungen für die Haltemittel sich radial nach außen verengen und so die Haltemittel formschlüssig führen. Sollte das betreffende Haltemittel sich mit seinem dem Installationsgerät zugewandten Schenkel von diesem entfernen, so wird es in dem sich verengenden Führungsspalt eingeklemmt und damit unbeweglich.

Um eine Standardposition für die Haltemittel im montierten Zustand zu gewährleisten, sind die streifenförmigen Haltemitteln gemäß einer Ausgestaltung der Erfindung jeweils mit Rastmittel versehen, die mit hierzu kompatiblen Rastmitteln am Installationsgerät zusammenarbeiten.

Vorzugsweise werden diese in vorteilhafter Weiterbildung der Erfindung vorgesehenen Rastmittel jeweils von einem Vorsprung am Installationsgerät gebildet, der in eine entsprechende Ausnehmung an dem in die Führung eingeschobenen streifenförmigen Haltemittel eingreift.

Hierbei ist gemäß einer bevorzugten Ausgestaltung der Erfindung vorgesehen, daß die Verrastung der Haltemittel nur mittels Werkzeug, vorzugsweise mittels Schraubendreher, lösbar ist, indem das Werkzeug zwischen das Haltemittel und das Gehäuse beziehungsweise den Sockel des Installationsgerätes eingebracht wird und durch Verkanten infolge Verdrehens des Werkzeuges dieses das Haltemittel von seiner Anlagefläche am Installationsgerät abhebt und so die Ausnehmung von dem darin eingreifenden Vorsprung trennt.

Die genannten Führungen dienen zunächst als Axialführungen für die darin aufgenommenen Haltemittel aber gleichzeitig auch insoweit zu deren Halterung, als hierdurch ein laterales Ausweichen verhindert wird und somit eine stabile Fixierung des betreffenden Installationsgerätes erreicht wird.

Die Haltemittel können als winkelförmige Streifen ausgebildet sein, deren einer Schenkel am Installationsgerät anschließt und deren jeweils anderer Schenkel in Ruhelage vom Installationsgerät absteht. Vorteilhafterweise sind hierbei die streifenförmigen Haltemittel als unter spitzem Winkel abgewinkelte Blattfedern ausgebildet.

Um die Haltefunktion zu verstärken können die Haltemittel mit hakenförmigen Abwinklungen versehen sein, die sich unter der Wirkung der Rückstellkraft der winkelförmigen Blattfeder in die Innenwand der Ausnehmung einkrallen.

Diese und weitere vorteilhafte Ausgestaltungen und Verbesserungen der Erfindung sind Gegenstand der Unteransprüche.

Anhand eines in der schematischen Zeichnung dargestellten Ausführungsbeispiels sollen die Erfindung, vorteilhafte Ausgestaltungen und Verbesserungen sowie besondere Vorteile der Erfindung näher erläutert und beschrieben werden.

Es zeigen:
- Fig. 1: eine Schrägansicht eines zur Aufnahme des erfindungsgemäßen Haltemittels vorbereiteten Installationsgerätes;
- Fig. 2: eine Schrägansicht des mit dem erfindungsgemäßen Haltemittel versehenen Installationsgerätes gemäß Fig. 1;
- Fig. 3: eine Seitenansicht eines mit dem erfindungsgemäßen Haltemittel versehenen Installationsgerätes;
- Fig. 4: eine Seitenansicht des mit dem erfindungsgemäßen Haltemittel versehenen um 90° gegenüber Fig. 3 gedrehten Installationsgerätes;
- Fig. 5: eine Draufsicht auf das Gerät gemäß Fig. 4.

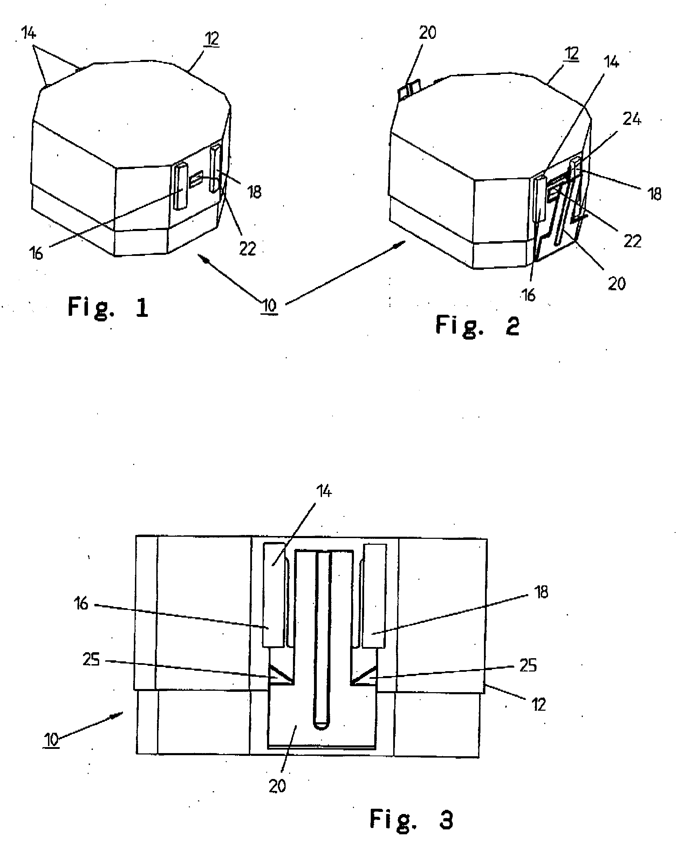

In Fig. 1 ist eine Schrägansicht eines Installationsgerätes 10 dargestellt, welches ein Umgehäuse 12 aufweist, in welchem weitere, hier nicht näher gezeigte Funktionsteile untergebracht sind. Das Gehäuse 12 besitzt einen näherungsweise ovalen Querschnitt, an dessen Schmalenden jeweils Führungen 14 angeordnet sind, die jeweils von zwei paarweise gegenüberliegend angeordneten Begrenzungsschienen 16, 18 gebildet sind. Die Innenkontur dieser Begrenzungsschienen 16, 18 ist vorzugsweise mit konischem Querschnitt versehen entsprechend einer Schwalbenschwanzführung. Diese Formgebung begünstigt die Zentrierung von hierin aufzunehmenden Haltemittel 20, welche von in Fig. 2 bis Fig. 5 gezeigten Federlaschen gebildet sind.

Zur Verankerung der in den Führungen 14 aufgenommenen Haltemittel 20 sind ferner am Gehäuse 12 nasenförmige Vorsprünge 22 angeformt, welche mit entsprechenden Ausnehmungen 24 an jeder Haltelasche 20 korrespondieren, wie beispielhaft in Fig. 2 gezeigt ist.

Fig. 2 zeigt ebenfalls eine Schrägansicht des in Fig. 1 dargestellten Installationsgerätes 10, welches jedoch im Unterschied zu Fig. 1 beiderends mit den erfindungsgemäßen Haltemitteln 20 versehen ist.

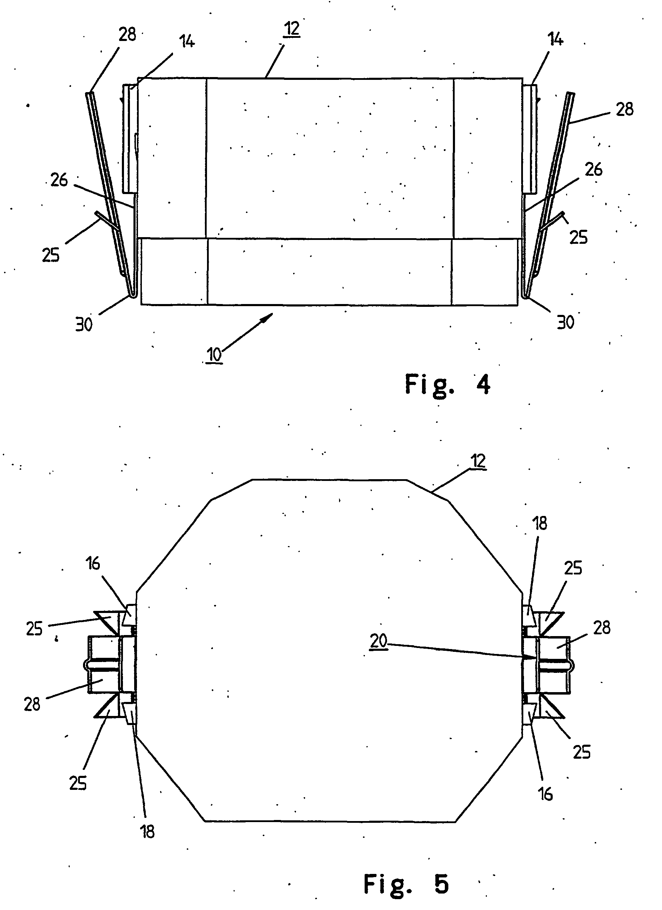

In Fig. 3 ist eine Seitenansicht eines mit dem erfindungsgemäßen Haltemittel 20 versehenen Installationsgerätes 10 wiedergegeben, wobei aus dieser Ansicht in Verbindung mit den Darstellungen in Fig. 4 und 5 die besondere Gestaltung der Haltemittel 20 mit paarweise angeformten Krallen 25 hervorgeht.

Fig. 4 zeigt eine weitere, gegenüber Fig. 3 um 90° gedrehte Seitenansicht des mit dem erfindungsgemäßen Haltemittel 20 versehenen Installationsgerätes 10. In dieser Darstellung wird deutlich, daß die Haltemittel 20 jeweils als spitzwinklig abgewinkelte Federlasche mit zwei Schenkeln 26, 28 ausgebildet sind, deren einer Schenkel 26 innerhalb der Führung 14 am Installationsgerät anliegt und deren anderer Schenkel 29 in der in Fig. 4 gezeigten Ruhestellung vom Installationsgerät 10 absteht. Hierbei ist die als Federgelenk 30 bezeichnete Verbindungsstelle beider Schenkel 26, 28 der Rückseite des Installationsgeräts 10 zugewandt.

In Fig. 5 ist eine Draufsicht auf das Gerät gemäß Fig. 4 dargestellt, welche die klammerartigen Anformungen 25 an den dem Installationsgerät 10 abgewandten Schenkeln 28 der Haltelaschen 20 deutlich zeigt.

## Patentansprüche

1. Elektrisches Installationsgerät (10) für den versenkten Einbau in einer Ausnehmung - insbesondere in einer Wandeinbaudose - in einer Montagefläche, welches Installationsgerät (10) mit selbsteinstellenden, als Federbügel ausgebildeten Haltemitteln (20) versehen ist, die sich an der Innenfläche der Ausnehmung form- und kraftschlüssig anlegen und das Installationsgerät (10) fixieren, wobei die Haltemittel (20) an dem Installationsgerät (10) geführt und mit diesem verrastet sind und bei Betätigung vom Installationsgerät (10) lösbar sind, wobei Führungen (14) für die Haltemittel (20) am Installationsgerät (10) angeformt sind, **dadurch gekennzeichnet, dass** die Führungen (14) für die Haltemittel (20) von paarweise einander zugeordneten Schienen (16, 18) mit trapezförmigem Querschnitt gebildet sind, deren Abstand sich radial nach außen verengt und welche die Haltemittel formschlüssig führen.

2. Elektrisches Installationsgerät nach Anspruch 1, **dadurch gekennzeichnet, dass** an den Haltemitteln (20) jeweils Rastmittel (24) vorgesehen sind, die mit hierzu kompatiblen Rastmitteln (22) am Installationsgerät (10) zusammenarbeiten.

3. Elektrisches Installationsgerät nach Anspruch 2, **dadurch gekennzeichnet, dass** als Rastmittel jeweils ein Vorsprung (22) am Installationsgerät (10) vorgesehen ist, der in eine entsprechende Ausnehmung (24) an dem in die Führung (14) eingeschobenen Haltemittel (20) eingreift.

4. Elektrisches Installationsgerät nach Anspruch 2 oder 3, **dadurch gekennzeichnet, dass** die Verrastung der Haltemittel (20) mittels Werkzeug, vorzugsweise mittels Schraubendreher, lösbar ist, indem das Werkzeug die Ausnehmung (24) von dem darin eingreifenden Vorsprung (22) trennt.

## Claims

1. An electrical installation device (10) for flush-mounting in a recess, especially in a wall mounting box, in a mounting surface, which installation device (10) is provided with self-adjusting holding means (20) which are arranged as spring clamps and rest on the inside surface of the recess in a positive and non-positive way and fix the installation device (10), with the holding means (20) being guided on the installation device (10) and being latched together with the same and being detachable from the installation device (10) upon actuation, with the guide means (14) for the holding means (20) being formed on the installation device, **characterized in that** the guide means (14) for the holding means (20) are formed by rails (16, 18) which are associated with each other in pairs and have a trapezoid cross section and whose distance narrows radially to the outside and guide the holding means in a positive-locking way.

2. An electrical installation device according to claim 1, **characterized in that** latching means (24) are each provided on the holding means (20), which latching means cooperate with mutually compatible latching means (22) on the installation device (10).

3. An electrical installation device according to claim 2, **characterized in that** a protrusion (22) on the installation device (10) is each provided as a latching means, which protrusion engages in a respective recess (24) on the holding means (20) slid into the guide means (14).

4. An electrical installation device according to claim 2 or 3, **characterized in that** the latching of the holding means (20) is detachable by means of a tool, preferably a screwdriver, such that the tool separates the recess (24) from the protrusion (22) engaging into the same.

## Revendications

1. Appareil d'installation électrique (10) pour un montage encastré dans un évidement, de préférence une boîte de montage mural, dans une surface de montage, lequel appareil d'installation (10) est muni de moyens de rétention (20) à ajustement automatique, conformés comme des étriers à ressort, qui s'appuient par engagement positif et par friction sur la surface intérieure de l'évidement et fixent l'appareil d'installation (10), les moyens de rétention (20) étant guidés sur l'appareil d'installation (10) et engagés avec celui-ci et pouvant être défaits lors de l'actionnement de l'appareil d'installation (10), des guides (14) étant formés pour les moyens de rétention (20) sur l'appareil d'installation (10), **caractérisé en ce que** les guides (14) pour les moyens de rétention (20) sont formés par des rails (16, 18) de section trapézoïdale disposés par paire, dont l'écartement se resserre dans le sens radial vers l'extérieur et qui guident les moyens de rétention par engagement positif.

2. Appareil d'installation électrique selon la revendication 1, **caractérisé en ce qu'**il est prévu sur chacun des moyens de rétention (20) des moyens d'engagement (24) qui coopèrent avec des moyens d'engagement compatibles (22) sur l'appareil d'installation (10).

3. Appareil d'installation électrique selon la revendication 2, **caractérisé en ce qu'**il est prévu comme moyens d'engagement une saillie (22) sur l'appareil d'installation (10) qui se met en prise dans un évidement (24) correspondant sur les moyens de rétention (20) insérés dans le guide (14).

4. Appareil d'installation électrique selon la revendication 2 ou 3, **caractérisé en ce que** l'engagement des moyens de rétention (20) peut être défait au moyen d'un outil, de préférence au moyen d'un tournevis, en séparant à l'aide de l'outil l'évidement (24) de la saillie (22) qui se met en prise dans celui-ci.
